# EUROPEAN PATENT SPECIFICATION

(11) **EP 1 624 205 B1**
(45) Date of publication and mention of the grant of the patent: **26.05.2010**
(21) Application number: 05016265.0
(22) Date of filing: 27.07.2005
(51) Int. Cl.: F16C 19/18, F16C 43/04, F16C 35/063

(54) **Bearing apparatus for a wheel of vehicle**
Lagervorrichtung für ein Fahrzeugrad
Dispositif de roulement pour roue de véhicule

(30) Priority: 03.08.2004 JP 2004226282
(43) Date of publication of application: 08.02.2006
(73) Proprietor: NTN Corporation, Osaka (JP)
(72) Inventor: Norimatsu, Takayuki, Iwata-shi Shizuoka-ken (JP); Aritake, Yasuhiro, Iwata-shi Shizuoka-ken (JP)
(74) Representative: Cohausz & Florack

(56) References cited:
- EP-A- 1 264 998
- US-A1- 2002 051 597
- US-A1- 2003 103 705
- US-B1- 6 575 637
- PATENT ABSTRACTS OF JAPAN vol. 2002, no. 11, 6 November 2002 (2002-11-06) -& JP 2002 188629 A (NSK LTD), 5 July 2002 (2002-07-05)
- PATENT ABSTRACTS OF JAPAN vol. 2003, no. 12, 5 December 2003 (2003-12-05) -& JP 2003 287039 A (KOYO SEIKO CO LTD), 10 October 2003 (2003-10-10)

## Description

### BACKGROUND OF THE INVENTION

### Field of the Invention

The present invention relates to a method for producing a bearing apparatus of a vehicle such as an automobile for rotatably supporting a wheel relative to a suspension apparatus, and more particularly to a method for producing a bearing apparatus of a vehicle which can improve durability of an inner ring secured by caulking on a hub wheel of the bearing apparatus.

### Description of Background Art

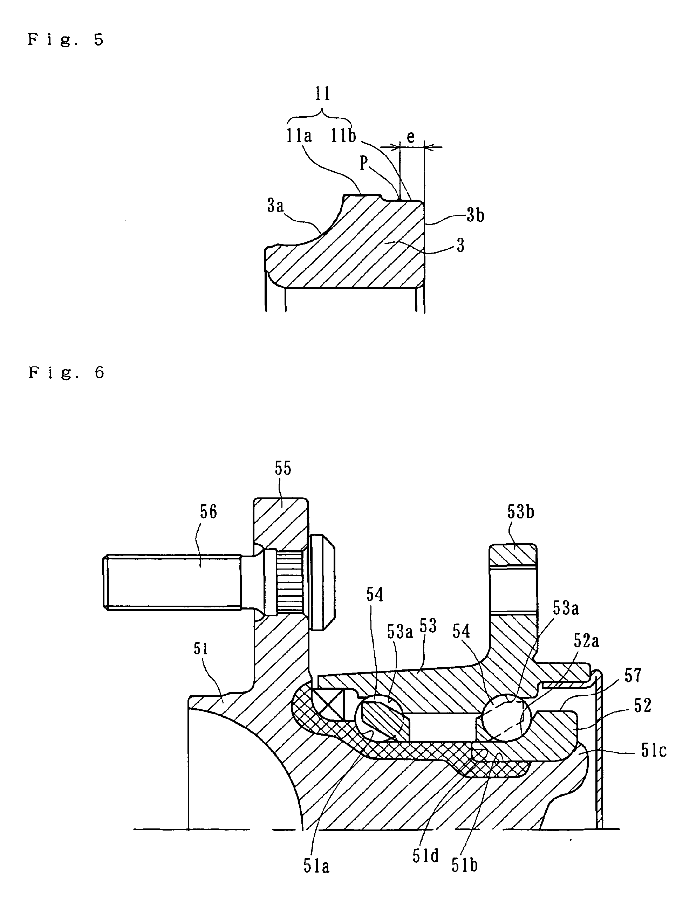

There are two types of bearing apparatus of a vehicle, that is, for a drive wheel and for a driven wheel. Especially in the bearing apparatus of a vehicle for rotatably supporting a wheel relative to a suspension apparatus, it is required not only to be made at a low cost but to be light weight and small size for improving the fuel consumption. A representative example of the bearing apparatus for a driven wheel of vehicle of the prior art is shown in Fig. 6. Other examples of the bearing apparatus for a driven wheel of vehicle of the prior art are disclosed in US 2002/0051597 A1 and EP 1 264 998 A

The bearing apparatus is that called as a third generation and has a hub wheel 51, an inner ring 52, an outer ring 53, and double row rolling elements 54, 54. The hub wheel 51 has at one end a wheel mounting flange 55 integrally formed therewith, an inner raceway surface 51a, and an axially extending portion 51b extending axially from the inner raceway surface 51a. Hub bolts 56 for securing a wheel on the flange 55 are arranged equidistantly along the periphery of the flange 55.

The inner ring 52 formed with an inner raceway surface 52a on its outer circumferential surface is press-fitted onto the axially extending portion 51b of the hub wheel 51. The inner ring 52 is secured axially immovable to prevent it from being fallen off from the axially extending portion 51b by a caulked portion 51c formed by plastically deforming the end portion of the axially extending portion 51b radially outward.

The outer ring 53 is integrally formed on its outer circumferential surface with a body mounting flange 53b and is also formed on its inner circumferential surface with double row outer raceway surfaces 53a, 53a. Double row rolling elements 54, 54 are freely rollably held between the outer raceway surfaces 53a, 53a and the opposing inner raceway surfaces 51a, 52a.

The hub wheel 51 is made of carbon steel including carbon of 0.40∼0.80% by weight and formed with a layer (shown by cross-hatching) in a region from the base of the wheel mounting flange 55 to the axially extending portion 51b through the inner raceway surface 51a hardened by high frequency induction hardening. The caulked portion 51c is remained as its original surface hardness after its forging. On the other hand, the inner ring 52 is made of high carbon chrome bearing steel such as SUJ2 and is hardened to its core by quenching.

Thus it is possible to realize a bearing apparatus for a wheel of vehicle of low cost and having a sufficient durability, to prevent generation of damage such as cracks on the caulked portion 51c, and also to prevent generation of large change in the diameter of the inner ring 52 secured on the hub wheel 51 by the caulked portion 51c. Also it is possible to reduce the potential of the inner ring 52 being damaged by the securing work, to maintain the preload at an appropriate value, and also to reduce the number of parts and steps of machining and assembly (see Japanese Laid-open Patent Publication No. 129703/1999).

However, in the bearing apparatus of the prior art, it is impossible to prevent generation of hoop stress in the outer diameter portion 57 of the inner ring 52 since the inner diameter of the inner ring 52 is expanded radially outward due to the radially outward plastic deformation of the axially extending portion 51b near the caulked portion 51c during formation of the caulked portion 51c.

It has been proposed in order to reduce the hoop stress to suppress the amount of plastic deformation in caulking by changing the configuration of the end portion of the axially extending portion 51b of the hub wheel 51. However, since it is required that the caulked portion 51c has strength sufficient only to strongly secure the inner ring 52 even if a large momentum load is applied to the bearing apparatus, a conflicting problem i.e. suppressing the amount of plastic deformation as well as ensuring the strength of the caulked portion must be simultaneously solved.

When the hoop stress is caused in the outer diameter portion 57 of the inner ring 52 and rust is generated in this portion, diffusible hydrogen existing in the circumstances would penetrate into the material of the inner ring 52 and destroy its metal grain boundary. Thus the so-called "delayed fracture" would be caused.

Heretofore there have been developed several methods for measuring the hoop stress itself, e.g. a method for irradiate X-ray on the outer diameter portion 57 of the inner ring 52 in which maximum hoop stress is caused, or a method for sticking a strain gauge on the outer circumferential surface of the inner ring 52. However, neither method is simple and efficient in due consideration of mass production process.

### SUMMARY OF THE INVENTION

It is, therefore, an object of the present invention to provide a method for producing a bearing apparatus for a wheel of vehicle with which the hoop stress generated in the inner ring can be limited during the caulking process below a predetermined level and can improve the durability and reliability of the inner ring.

For achieving the object of the present invention, there is provided, according to claim 1, a method for producing a bearing apparatus for a wheel of vehicle having an outer member formed with double row outer raceway surfaces on the inner circumferential surface thereof; an inner member including a hub wheel and an inner ring, the hub wheel having at its one end a wheel mounting flange and an axially extending portion extending from the wheel mounting flange, the inner ring being fitted onto the axially extending portion, and the hub wheel and the inner ring being formed on their outer circumferential surfaces with double row inner raceway surfaces respectively opposing to the double row outer raceway surfaces; and double row rolling elements freely rollably held by cages between the opposing double row inner and outer raceway surfaces; wherein the method comprises the steps of securing the inner ring axially immovable by plastically deforming the end portion of the axially extending portion radially outward, and limiting a hoop stress in the inner member below a predetermined level by measuring a radial expansion of the outer circumferential surface of the inner ring before and after said plastic deformation thereof and by controlling the amount of the radial expansion of the inner ring on the basis of predetermined relation between the hoop stress and the amount of radial expansion of the inner ring.

According to the invention, since an outer diameter of the inner ring before and after said plastic deformation thereof is measured, the amount of the radial expansion of the inner ring is controlled on the basis of predetermined relation between the hoop stress and the amount of radial expansion of the inner ring, and a hoop stress in the inner member is limited below a predetermined level, it is possible to very easily and exactly control the hoop stress in the inner ring caulked on the hub and to prevent generation of the cracking of the inner ring or the delayed fracture, and thus to provide a bearing apparatus having superior durability and reliability of the inner ring.

Preferably, the relation between the amount of radial expansion of the inner ring and the hoop stress generated in the inner ring is defined by a linear proportional relation. This enables the hoop stress itself generated in the inner ring to be measured easily and exactly.

According to the present invention, the hub wheel may be made of medium carbon steel including carbon of 0.40∼0.80% by weight and a region from the inner raceway surface to the axially extending portion of the hub wheel is formed with a hardened layer having surface hardness 58-64 HRC by high frequency induction hardening, the caulked portion is remained as a non-quenching portion having surface hardness below 25 HRC, and the inner ring is made of high carbon chrome bearing steel and is hardened to its core by dipping quenching to have surface hardness of 58-64 HRC. This enables the hoop stress generated in the inner ring by caulking to be easily and exactly limited below a predetermined level e.g. 250 MPa.

According to the present invention, the outer circumferential surface of inboard side portion of the inner ring may be formed with a stepped portion of a smaller diameter. This enables the amount of expansion of the stepped portion exposed to rusty circumstances to be controlled and also the hoop stress to be limited below a predetermined level.

According to the present invention, an annular recess can be formed around the outer circumferential portion of the axially extending portion prior to the caulking at the end thereof corresponding to the inboard side end of the inner ring. This enables the deformation of the outer circumferential surface, especially the inboard side stepped portion to be suppressed, and also the strength of the caulked portion to be increased as well as the hoop stress generated in the inner ring to be reduced.

### Effect of the Invention

The method for producing a bearing apparatus for a wheel of vehicle of the present invention having an outer member formed with double row outer raceway surfaces on the inner circumferential surface thereof; an inner member including a hub wheel and an inner ring, the hub wheel having at its one end a wheel mounting flange and an axially extending portion extending from the wheel mounting flange, the inner ring being fitted onto the axially extending portion, and the hub wheel and the inner ring being formed on their outer circumferential surfaces with double row inner raceway surfaces respectively opposing to the double row outer raceway surfaces; and double row rolling elements freely rollably held by cages between the opposing double row inner and outer raceway surfaces; comprises the steps of securing the inner ring axially immovable by plastically deforming the end portion of the axially extending portion radially outward, and limiting a hoop stress in the inner member below a predetermined level by measuring a radial expansion of the outer circumferential surface of the inner ring before and after said plastic deformation thereof and by controlling the amount of the radial expansion of the inner ring on the basis of predetermined relation between the hoop stress and the amount of radial expansion of the inner ring. Accordingly, it is possible to very easily and exactly control the hoop stress in the inner ring caulked on the hub and to prevent generation of the cracking of the inner ring or the delayed fracture, and thus to provide a bearing apparatus having superior durability and reliability of the inner ring. Best Mode for carrying out the Invention

The best mode for carrying out the present invention is a method for producing a bearing apparatus for a wheel of vehicle which has an outer member having a body mounting flange integrally formed therewith and double row outer raceway surfaces formed on the inner circumferential surface thereof; an inner member including a hub wheel and an inner ring, the hub wheel having at its one end a wheel mounting flange, an inner raceway surface opposing to one of the double row outer raceway surfaces, and an axially extending portion extending from the inner raceway surface, the inner ring being fitted onto the axially extending portion and being formed on their outer circumferential surfaces with an another inner raceway surfaces opposing to the other of the double row outer raceway surfaces; and double row rolling elements freely rollably held by cages between the opposing double row inner and outer raceway surfaces; wherein the method comprises the steps of securing the inner ring axially immovable by plastically deforming the end portion of the axially extending portion radially outward, and limiting a hoop stress in the inner member below a predetermined level by measuring a radial expansion of the outer circumferential surface of the inner ring before and after said plastic deformation thereof and by controlling the amount of the radial expansion of the inner ring on the basis of predetermined relation between the hoop stress and the amount of radial expansion of the inner ring.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of a bearing apparatus for a wheel of vehicle produced according to the present invention;
- Fig. 2: is a graph showing a relation between the hoop stress generated in the inner ring by caulking and the amount of radial expansion of the outer circumferential surface of the inner ring;
- Figs. 3(a): and 3(b) are explanatory drawings wherein Fig. 3 (a) shows a method for measuring the run-out of the outer circumferential surface of the inner ring in its independent condition and Fig. 3 (b) shows a method for measuring the run-out of the outer circumferential surface of the inner ring after being caulked;
- Figs. 4(a): and 4(b) are explanatory drawings wherein Fig. 4(a) shows a method for measuring the amount of the outer circumferential surface of the inner ring before caulking and Fig. 4(b) shows a method for measuring the amount of expansion of the outer circumferential surface of the inner ring after caulking;
- Fig. 5: is an explanatory drawing showing a position for measuring the amount of the outer circumferential surface of the inner ring; and
- Fig. 6: is a longitudinal section view showing a bearing apparatus for a wheel of vehicle of the prior art.

### DESCRIPTION OF THE PREFERRED EMBODIMENTS

### Embodiment 1

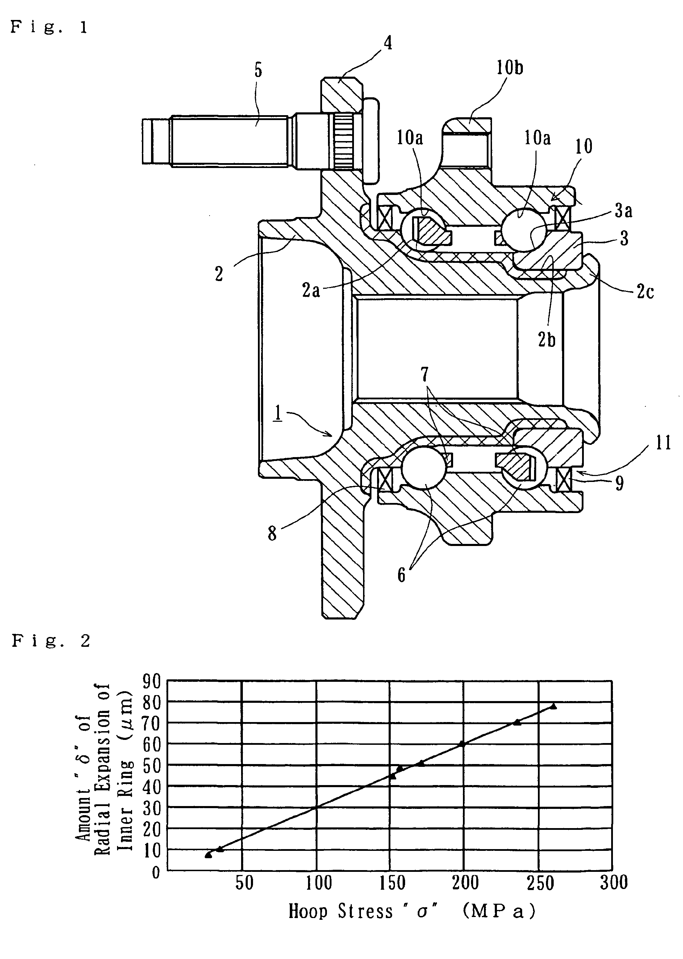

Fig. 1 is a longitudinal cross-section of a first embodiment of a bearing apparatus for a wheel of vehicle produced according to the present invention. In the description below, a term "outboard side" (a left-hand side in drawings) of the apparatus denotes a side which is positioned outside of the vehicle body and a term "inboard side" (a righthand side in drawings) of the apparatus denotes a side which is positioned inside of the body when the bearing apparatus is mounted on the vehicle body.

The bearing apparatus for a wheel of vehicle is that called as a third generation and comprises an inner member 1, an outer member 10, and a double row rolling elements (balls) 6, 6 rollably contained between the inner and outer members 1 and 10. The inner member 1 comprises a hub wheel 2 and an inner ring 3 press-fitted onto the hub wheel 2 via a predetermined interference.

The hub wheel 2 has a wheel mounting flange 4 for mounting a wheel (not shown) integrally formed therewith at the outboard side end, and hub bolts 5 for securing a wheel on the flange 4 are arranged equidistantly along the periphery of the flange 4. The hub wheel 2 is formed with an inner raceway surface 2a on its outer circumferential surface and axially extending cylindrical portion 2b axially extending from the inner raceway surface 2a. An inner ring 3 formed with an inner raceway surface 3a on its outer circumferential surface is press-fitted onto the axially extending portion 2b of the hub wheel 2. The inner ring 3 is secured axially immovable to prevent it from being fallen off from the axially extending portion 2b by a caulked portion 2c formed by plastically deforming the end portion of the axially extending portion 2b radially outward.

The outer member 10 is integrally formed on its outer circumferential surface with a body mounting flange 10b for mounting this outer member 10 on a body (not shown) and is also formed on its inner circumferential surface with double row outer raceway surfaces 10a and. Double row rolling elements 6, 6 are freely rollably held between the outer and inner raceway surfaces 10a, 10a and 2a, 3a by cages 7, 7. Seals 8 and 9 are arranged at the ends of the outer member 10 to prevent leak of grease contained within the bearing as well as ingress of rain water or dusts from outside.

The illustrated bearing apparatus is that is the so-called "third generation type", however the present invention can also be applied to bearing apparatus of the first and second generation in which a pair of inner rings are fitted on the axially extending portion of the hub wheel. In the illustrated embodiment, a double row angular ball bearing using balls as rolling elements is shown, however other bearing such as a double row tapered roller bearing using tapered rollers as the rolling elements may be adopted.

The hub wheel 2 is made of medium carbon steel including carbon of 0.40∼0.80% by weight such as S53C and formed with hardened layer 20 having a surface hardness 58-64 HRC by high frequency induction hardening at the inner raceway surface 2a of the outboard side, a seal land portion with which the sealing means 8 contacts, and the axially extending portion 2b. The caulked portion 2c is remained as a no-quenching portion having a surface hardness below 25 HRC after its forging. On the other hand, the inner ring 3 is made of high carbon chrome bearing steel such as SUJ2 and is hardened to its core by dipping quenching to have a surface hardness of 58-64 HRC.

The outer member 10 is made of medium carbon steel including carbon of 0.40∼0.80% by weight such as S53C and its double raceway surfaces 10a and 10a are hardened by high frequency induction quenching to have a surface hardness of 58-64 HRC.

The present applicant analyzed causes of generation of the hoop stress in the outer diameter portion 11 of the inner ring 3 and investigated the relation between the hoop stress σ generated by the caulking process and the amount δ of radial expansion of the outer diameter portion 11 of the inner ring 3. As a result of which, it has found that the larger the hoop stress σ by caulking, the larger the amount δ of radial expansion of the outer circumference portion of the inner ring 3, and that there is a substantially linearly proportional relation between them as shown in Fig. 2. Accordingly, the applicant has had a conclusion that the hoop stress σ generated in the inner ring 3 can be limited below a predetermined level by controlling the amount δ of radial expansion of the inner ring 3. When the inner ring 3 is used in a condition exposed to the external environment, it is necessary to limit the hoop stress below 250 MPa.

As shown in Fig. 2, it can be seen that the hoop stress σ caused in the outer circumferential portion 11 of the inner ring 3 generated by caulking process can be limited below 250 MPa by controlling the radial expansion δ of the portion 11 of the inner ring 3 below 75 µ m. Thus the criterion for determining the acceptability is set at 75 µm, that is, when the radial expansion δ of the inner ring 3 is below 75 µ m, the product (inner ring 3) will be accepted, on the contrary, when the radial expansion δ of the inner ring 3 is over 75 µ m, the product will not be accepted. By adopting such a method, it is possible to very easily and exactly control the hoop stress σ of the inner ring 3 caulked onto the hub wheel 2 and thus to limit the hoop stress σ of the inner ring 3 below the predetermined level. Accordingly it is possible to prevent generation of cracking or delayed fracture of the inner ring 3 and thus to provide a bearing apparatus for a wheel of vehicle which can improve the durability and reliability of the inner ring 3 caulked on the hub wheel 2.

In the example above, although it is described that the limiting value of the hoop stress σ is 250 MPa, this comes under a condition in which the inner ring 3 is exposed to the external circumstances. If the inner ring 3 is used within a circumstances sealed off from the external circumstances, the limiting value of the hoop stress may be set at 300 MPa.

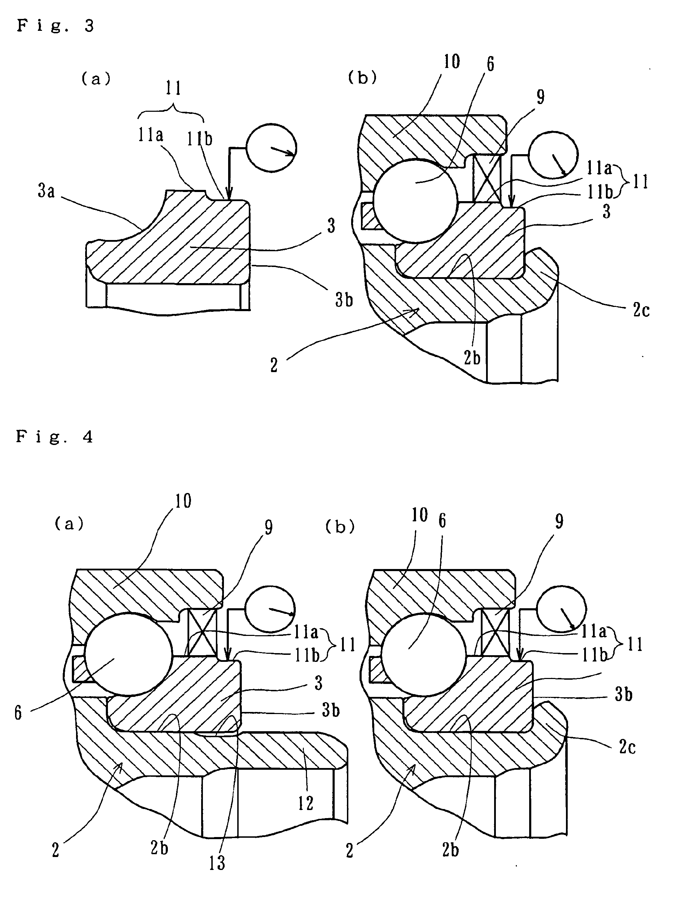

In the illustrated embodiment, as best shown in Fig. 3 (b), a stepped portion 11 b is formed on the outer diameter portion 11 at an inboard side from a portion 11a on which the seal 9 is fitted. The diameter of the stepped portion 11b is smaller than that of the portion 11a. This is because that the hoop stress σ of the inner ring 3 generated is greatest at the outer circumferential surface. Thus it is possible to limit the hoop stress σ of the inner ring 3 below the predetermined level (value) by controlling the amount δ of the radial expansion of the stepped portion 11b at least exposed to the external circumstances. Of course it is also possible to adopt a structure not having the stepped portion 11b.

The amount δ of radial expansion of the stepped portion 11b of the inner ring 3 is defined as a difference between a reading of a run-out of the stepped portion 11b of the inner ring 3 in its independent condition shown in Fig. 3(a) and a reading of a run-out of the stepped portion 11b of the inner ring 3 after being caulked shown in Fig. 3(b). The amount δ may be also defined as a difference between readings of run-outs of the stepped portion 11b before and after caulking process as shown in Figs. 4 (a) and (b). In order to improve the reliability of measured data, it is preferable to previously set the measuring point P at a position apart a distance "e" from the end 3b of the inner ring 3.

Since it has been found that the amount δ of radial expansion of the inner ring 3 is larger toward the inboard side thereof, an annular recess 13 is formed around the outer circumferential portion of the axially extending portion 2b prior to the caulking at the end thereof corresponding to the inboard side end of the inner ring 3 as shown in Fig. 4(a). The provision of the annular recess 13 makes it possible to suppress the deformation of the outer circumferential portion 11 of the inner ring 3 by caulking, especially the deformation of the stepped portion 11b at the inboard side thereof and thus to increase the strength of the caulked portion 2c as well as to reduce the hoop stress σ generated in the inner ring 3. The strength of the caulked portion 2c is defined for example by an amount of axial displacement of the inner ring 3 generating the axial force more than 20 kN.

### Applicability in Industries

The method for producing a bearing apparatus for a wheel of vehicle according to the present invention can be applied to the self-retaining type bearing apparatus of the first through third generations in which the inner ring is secure by press-fitting the inner ring onto the axially extending portion of the hub wheel and then by caulking the end of the axially extending portion of the hub wheel with plastic deformation.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

## Claims

1. A method for producing a bearing apparatus for a wheel of vehicle having
an outer member (10) formed with double row outer raceway surfaces (10a, 10a) on the inner circumferential surface thereof;
an inner member (1) including a hub wheel (2) and an inner ring (3), the hub wheel (2) having at its one end a wheel mounting flange (4) and an axially extending portion (2b) extending from the wheel mounting flange (4), the inner ring (3) being fitted onto the axially extending portion (2b), and the hub wheel (2) and the inner ring (3) being formed on their outer circumferential surfaces with double row inner raceway surfaces (2a, 3a) respectively opposing to the double row outer raceway surfaces (10a, 10a); and
double row rolling elements (6, 6) freely rollably held by cages (7,7) between the opposing double row inner and outer raceway surfaces (2a, 3a and 10a, 10a);
wherein the method comprises the steps of:
- securing the inner ring (3) axially immovable by plastically deforming the end portion of the axially extending portion (2b) radially outward, and
- limiting a hoop stress in the inner member (3) below a predetermined level by measuring an outer diameter of the inner ring (3) before and after said plastic deformation thereof and by controlling the amount of the radial expansion of the inner ring (3) on the basis of predetermined relation between the hoop stress and the amount of radial expansion of the inner ring (3).

2. Method according to claim 1, wherein the relation between the amount of radial expansion of the inner ring (3) and the hoop stress generated in the inner ring (3) is defined by a linear proportional relation.

3. Method according to claim 1 or 2, wherein the hub wheel (2) is made of medium carbon steel including carbon of 0.40~0.80% by weight and a region from the inner raceway surface (2a) to the axially extending portion (2b) of the hub wheel (2) is formed with a hardened layer having surface hardness 58~64 HRC by high frequency induction hardening, the caulked portion (2c) is remained as a non-quenching portion having surface hardness below 25 HRC, and the inner ring (3) is made of high carbon chrome bearing steel and is hardened to its core by dipping quenching to have surface hardness of 58-64 HRC.

4. Method according to any one of claims 1 through 3, wherein the outer circumferential surface of inboard side portion of the inner ring (3) is formed with a stepped portion of a smaller diameter.

5. Method according to any one of claims 1 through 4, wherein an annular recess (13) is formed around the outer circumferential portion of the axially extending portion (2b) prior to the caulking at the end thereof corresponding to the inboard side end of the inner ring (3).

## Patentansprüche

1. Verfahren zur Herstellung einer Lagervorrichtung für ein Fahrzeugrad, die Folgendes aufweist:
eine äußeres Element (10), an dessen innerer umlaufender Oberfläche eine Doppelreihe Laufflächen (10a, 10a) ausgebildet ist,
ein inneres Element (1), das eine Radnabe (2) und einen inneren Ring (3) aufweist, wobei die Radnabe (2) an ihrem einen Ende einen Radbefestigungsflansch (4) und einen sich axial erstreckenden Abschnitt (2b) aufweist, der sich vom Radbefestigungsflansch (4) erstreckt, wobei der innere Ring (3) auf den sich axial erstreckenden Abschnitt (2b) eingepasst ist und die Radnabe (2) und der innere Ring (3) an ihren äußeren umlaufenden Oberflächen mit einer Doppelreihe innerer Laufflächen (2a, 3a) ausgebildet sind, die jeweils der Doppelreihe äußerer Laufflächen (10a, 10a) gegenüberliegen, und
eine Doppelreihe Rollelemente (6, 6), die durch Käfige (7, 7) zwischen den gegenüberliegenden Doppelreihen innerer und äußerer Laufflächen (2a, 3a und 10a, 10a) frei rollbar gehalten werden,
wobei das Verfahren folgende Schritte umfasst:
- Sichern des inneren Rings (3) gegen Axialverschiebung durch plastisches Umformen des Endabschnitts des sich axial erstreckenden Abschnitts (2b) radial auswärts und
- Beschränken der Umfangsspannung im inneren Element (3) auf ein vorab festgelegtes Maß durch Messen eines Außendurchmessers des inneren Rings (3) vor und nach dessen plastischer Umformung und durch Regulierung des Umfangs der radialen Ausdehnung des inneren Rings (3) auf der Grundlage eines vorab festgelegten Verhältnisses zwischen der Umfangsspannung und dem Umfang der radialen Ausdehnung des inneren Rings (3).

2. Verfahren nach Anspruch 1, wobei das Verhältnis zwischen dem Umfang der radialen Ausdehnung des inneren Rings (3) und der Umfangsspannung, die im inneren Ring (3) erzeugt wird, durch ein linear proportionales Verhältnis definiert wird.

3. Verfahren nach Anspruch 1 oder 2, wobei die Radnabe (2) aus Stahl mit mittlerem Kohlenstoffgehalt hergestellt wird, der 0,40~0,80 Massenprozent Kohlenstoff aufweist, und ein Bereich von der inneren Lauffläche (2a) bis zum sich axial erstreckenden Abschnitt (2b) der Radnabe (2) mit einer durch Hochfrequenzinduktionshärten gehärteten Schicht ausgebildet wird, die eine Oberflächenhärte von 58-64 HRC aufweist, der verstemmte Abschnitt (2c) als nicht abgeschreckter Abschnitt mit einer Oberflächenhärte von unter 25 HRC verbleibt und der innere Ring (3) aus Chromlagerstahl mit hohem Kohlenstoffgehalt hergestellt und bis in seinen Kern durch Tauchabschrecken gehärtet wird, um eine Oberflächenhärte von 58~64 HCR zu erzielen.

4. Verfahren nach einem der Ansprüche 1 bis 3, wobei an der äußeren umlaufenden Oberfläche des fahrzeuginnenseitigen Abschnitts des inneren Rings (3) ein abgestufter Abschnitt mit kleinerem Durchmesser gebildet wird.

5. Verfahren nach einem der Ansprüche 1 bis 4, wobei um den äußeren umlaufenden Abschnitt des sich axial erstreckenden Abschnitts (2b) vor dem Verstemmen an seinem Ende eine ringförmige Vertiefung (13) gebildet wird, die mit dem fahrzeuginnenseitigen Ende des inneren Rings (3) übereinstimmt.

## Revendications

1. Procédé de production d'un dispositif de roulement pour une roue de véhicule comprenant
une pièce externe (10) pourvue de deux lignes de surfaces de roulement externes (10a, 10a), à sa surface périphérique interne,
un pièce interne (1) comprenant une roue de moyeu (2) et une bague interne (3), le roue de moyeu (2) présentant à une première extrémité un flasque (4) de montage d'une roue et une portion (2b) d'extension axiale, s'étendant à partir du flasque (4) de montage d'une roue, la bague interne (3) étant ajustée sur la portion (2b) d'extension axiale, et la roue de moyeu (2) et la bague interne (3) étant pourvues à leurs surfaces périphériques externes, de deux lignes de surfaces de roulement internes (2a, 3a), respectivement opposées aux deux lignes de surfaces de roulement externes (10a, 10a), et
une double rangée d'éléments de roulement (6, 6) maintenus à roulement libre par des cages (7, 7) entre les deux lignes opposées de surfaces de roulement internes et externes (2a, 3a et 10a, 10a),
le procédé comprenant les étapes consistant à :
- maintenir la bague interne (3) immobilisée dans le sens axial par déformation plastique, radialement vers l'extérieur, de la partie terminale de la portion (2b) d'extension axiale, et
- limiter un effort circonférentiel dans la pièce interne (3) en dessous d'un niveau prédéterminé, en mesurant un diamètre externe de la bague interne (3) avant et après ladite déformation plastique de celle-ci et en contrôlant la valeur de l'expansion radiale de la bague interne (3) sur base d'une relation prédéterminée entre l'effort circonférentiel et la valeur de l'expansion radiale de la bague interne (3).

2. Procédé selon la revendication 1, dans lequel la relation entre la valeur de l'expansion radiale de la bague interne (3) et l'effort circonférentiel généré dans la bague interne (3) est définie par une relation linéaire proportionnelle.

3. Procédé selon la revendication 1 ou 2, dans lequel la roue de moyeu (2) est réalisée en acier à teneur en carbone moyenne, contenant 0,40~0,80% en poids de carbone, et une région s'étendant de la surface de roulement interne (2a) à la portion (2b) d'extension axiale de la roue de moyeu (2) est formée d'une couche durcie présentant une dureté superficielle HRC de 58~64, par trempe par induction à haute fréquence, la partie matée (2c) reste en tant que partie non trempée présentant une dureté superficielle HRC inférieure à 25, et la bague interne (3) est réalisée en acier à roulement au chrome à forte teneur en carbone, et est trempée à coeur par trempe par immersion, pour présenter une dureté superficielle HRC de 58~64.

4. Procédé selon l'une quelconque des revendications 1 à 3, dans lequel la surface circumférentielle externe de la partie, côté intérieur, de la bague interne (3), est formée avec une partie en gradin, de moindre diamètre.

5. Procédé selon l'une quelconque des revendications 1 à 4, dans lequel un évidement annulaire (13) est formé autour de la portion circumférentielle externe de la partie (2b) d'extension axiale, avant matage à son extrémité correspondant à l'extrémité côté intérieur de la bague interne (3).
